# EUROPEAN PATENT APPLICATION

(11) **EP 0 564 680 A1**
(43) Date of publication of application: **13.10.1993**
(21) Application number: 92106080.2
(22) Date of filing: 08.04.1992
(51) Int. Cl.: A47J 36/28

(54) **Food heating technique for producing high temperature**

(71) Applicant: Chou, Hsing-Tse, Lin Kou, Taipei Hsien (TW)
(72) Inventor: Chou, Hsing-Tse, Lin Kou, Taipei Hsien (TW)
(74) Representative: Goddar, Heinz J., Dr.

(57) **Abstract**

The present invention relates to a high temperature heating technic on food, and particularly to a novel invention which can produce a high temperature of being up to 250°C, reduce food heating time, as well as diminish the residual bacteria in food by such high temperature, yet get rid of the environmental contamination and allow the user to eat safely.

The present invention is designed to comprise, principally quicklime, a medium temperature heating pack (23), a high temperature heating pack (24) and a heater lid (17) wherein quicklime is the main component for raising temperature, the medium temperature heating pack (23) includes a kind of temperature raising liquid for creating a first stage of temperature changing of quicklime, while the high temperature heating pack (24) includes a kind of temperature raising liquid for creating a second stage of temperature changing after the first stage temperature changing, the heater lid can make the temperature raising liquids in the medium and high temperature heating packs mix with quicklime rapidly to produce chemical reaction and so as to release heat; by this unique technique, the temperature can reach a high temperature of up to 250°C in a very short time, so that the heating time of food can be diminished, thus the safty and sanitation level can be reduced, and the residual bacteria in food can be diminished , thus the safty and samitation level can be increased, the heating materials are all nontoxic which can be resolved naturally,so as being not contaminable to the environment.

## Description

### BACKGROUND OF THE INVENTION:

The present invention relates to a high tempreature heating technic on food, and particularly to a navel invention which can procuce a high temperature of being up to 250°C., reduce food heating time, as well as diminish the residual bacteria in food by such high temperature, yet get rid of the environmental contamination and allow the users to eat safely.

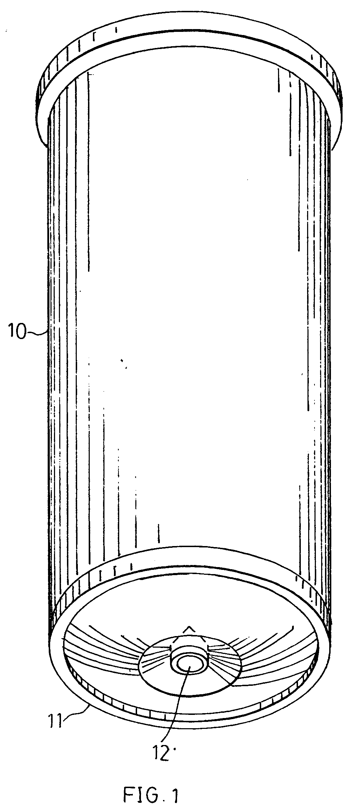

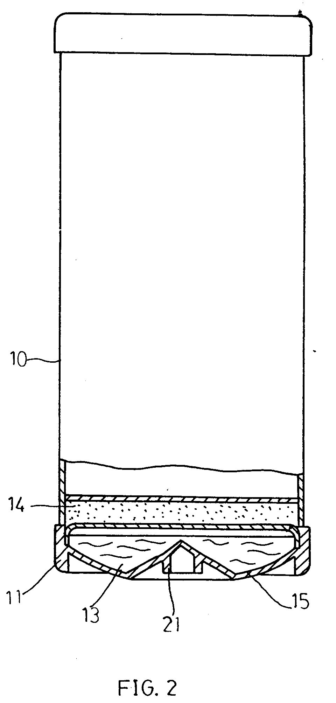

During these ages, the life level has been gradually raising up, and the life of people has been getting busier, time owned by people seems to be always inadquate. There have been being fast food, quick lunch....etc. for resolving the time problem; also there have been being a lot of automatic heated foods suitable for taking out, such foods will be capable of being automatically heated so as being hot and edible when they are to be eaten; all these can suit people's convenience. However, the automatically heated foods in the market have longer heating time ( from several minutes to about 10 minutes in order to get the predetermined temperature ), e.g., for 50g quicklime + 10cc normal water ( 50g CaO 10cc H₂ O ) , they need 3 minutes to get the predetermined temperature. Yet the temperature thereof is not very high ( from more than 80°C to about 200°C. ), e.g., for 50g quicklime + about 8cc distilled water + about 0.3g salt (50g CaO(s) + about 8cc H₂O (1) + about 0.3 Nacl (s)), the temperature thereof are up to only 200°C ; besides, there is only one perssing pin provided on a heater lid, so that when the pressing pin pierces the water bag, water in the bag can flow out only from a small hole, and the heat reaction thereof can not proceed rapidly, the heating effect is hence reduced ( as shown is Fig. 1,2 ) , the whole heating effect therefore is bad. If the foods are in a high temperature for quite a long time, they will be degenerated ( like the case of hot beverages in a vending machine ), the eaters are subject to damage after eating them, further, the reaction products of the heating reaction are not all resolvable by the Nature, even more, they may include toxic materials, so as to contaminate the environment.

### SUMMARY OF THE INVENTION

The inventor knew well the abovestated disadvantages, and spent a lot of time, expenditure and effort to undergo a hard study, and experienced many improvements, finally made this invention. The principal object thereof is to take advantage of the unique device including quicklime, medium and high temperature heating packs and a heater lid, wherein a pressing pin and a protruding piercing body on the heater lid pierce through the medium temperature pack, such that the temperature raising liquids in the medium and high temperature heating packs can be mixed rapidly with quicklime and produce chemical reaction, thus there will be a high temperature of being up to 250°C after a very short time, this not only reduces the heating time of foods, but also diminishes the residual bacteria in these foods by high temperature, and may prevent the foods from degenerating due to the lenghty heating, and therefore provides eaters hot and safe edible foods; such device uses the stony heating materials which can be resolved by the Nature, are not toxic , as well as not able to contaminate the environment.

In order to achieve the abovementioned object, the technical approaches and features thereof are taken, which will be stated according to the drawings as described below:

### BRIEF DESCRIPTION OF THE DRAWINGS

Fig. 1 is a drawing showing a conventional technic in practice.
Fig. 2 is a sectional drawing of a conventional device.
Fig. 3 is a practical exemplified drawing of an embodiment of the present invention.
Fig. 4 is a sectional drawing of the embodiment of the present invention.
Fig. 5 is a schematic view of the present invention showing the functions thereof.
Fig. 6 is a schematic view of the present invention.
Fig. 7 is a time-temperature changing curve of the present invention.

### DETAILED DESCRIPTION OF THE PREFERRED ENBODIMENTS

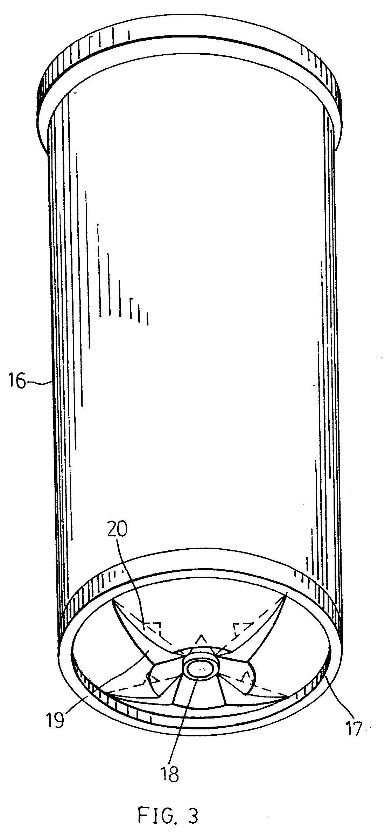

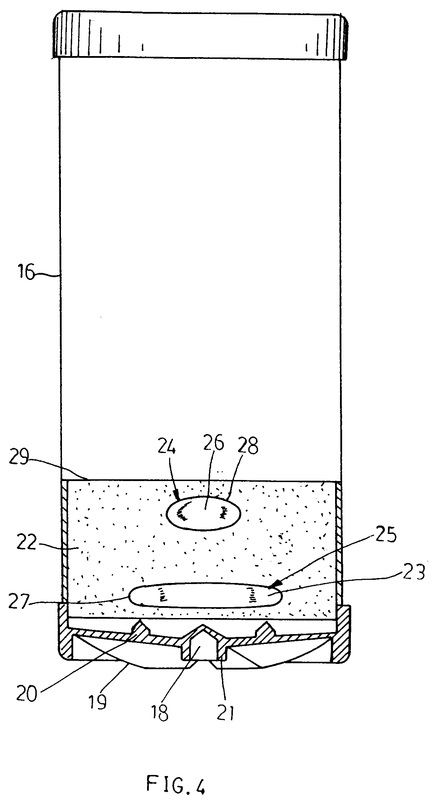

As shown in Fig. 3 and 4, the present invention includes structurally quicklime 22, a medium temperature heating pack 23, a high temperature heating pack 24,a heater lid 17, they are installed on the bottom end of a can 16, wherein the medium temperature heating pack 23 has therein a kind of heat raising liquid which contains the components of about 0.03g salt, about 8cc distailled water, about 0.8cc glacial acetic acid ( i.e., about 0.03g Nacl (s) + about 8cc H₂O (1) + about 0.8cc CH₃ COOH (1). This pack is produced as follows: the distilled water is heated to 100°C to purify its quality and to be sterilized, its temperature is then lowered to 20-25°C; after that,salt NaCl(s) is added and they are heated to 100°C to completely resolve the salt, such that the water is stabilized and sterilized; then glacial acetic acid ( CH₃ COOH(1) ) is added, heat them slightly to about 3O°C, and allow them descend naturally to about 22°C, and finally pack them with normal plastic film. The high temperature heating pack has therein a kind of temperature raising liquid which contains the conponents of about 0.02cc salt water, about 0.8cc glacial aceic acid and about 9cc distilled water ( their chemical formula is about 0.02cc NaCl (aq) + about 0.8cc CH₃ COOH(1) + about 9cc H₂O(1) ). The production process is similar to that of the medium temperature heating pack, but the covering layer 28 and the ratios among the components are different from those of the medium temperature heating pack 23, ( i.e., the ratios among the components of the mediun temperature heating pack are 1 (NaCl) : 89 (H₂O) : 2.6 (CH₃ COOH), while the ratios among the components of the high temperature heating pack are 0.5 (NaCl) : about 44.5 (H₂ O) : about 1.3 (CH₃ COOH); and the covering layer 28 is a special plastic film which can just be melted when the temperature is raised up to 140°C. ) The heater lid 17 provides with a perssing pin at the mid point of its lid body 21, in the four sides surrounding the pin there is respectively a bending groove 19, the bottom end of the groove protrudes out from the inner side of the lid body and has respectively a protruding piercing body.

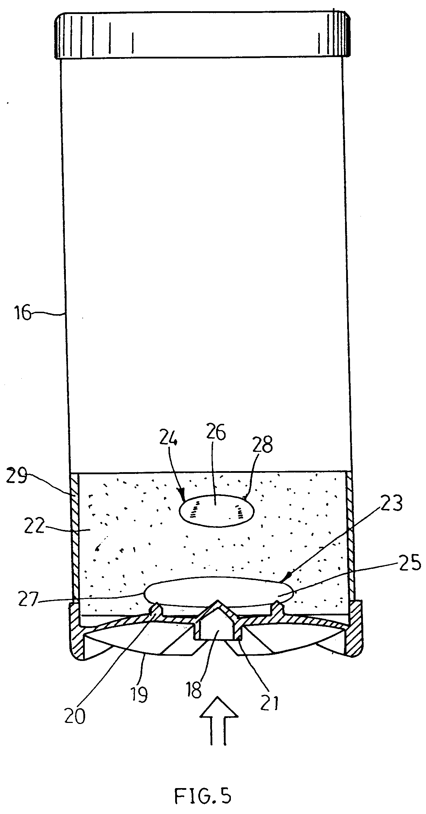

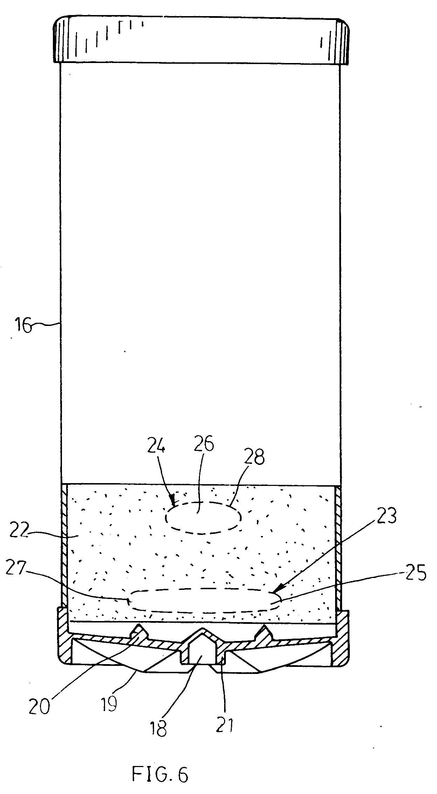

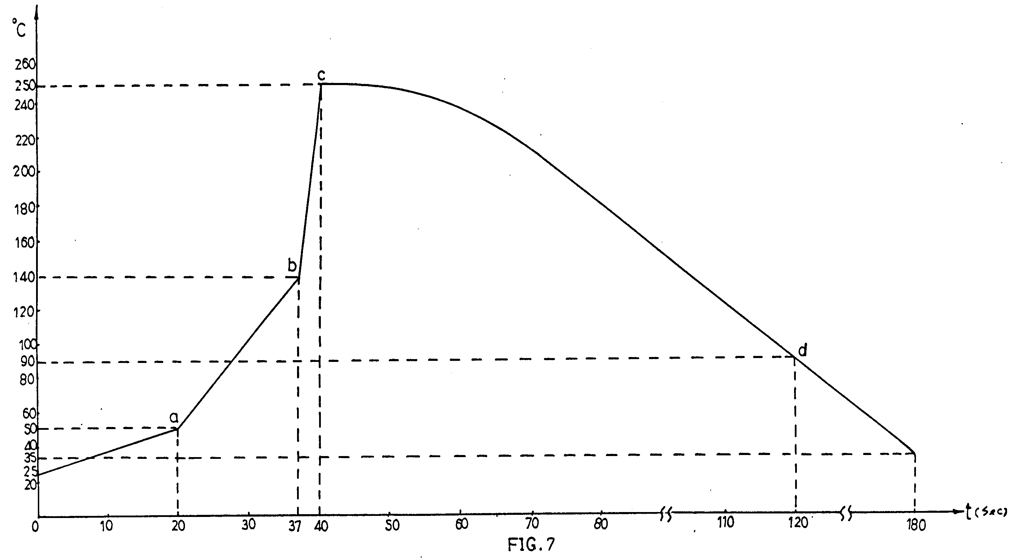

As shown in Fig. 5, when in use, the heater lid 17 is perssed down to allow the pressing pin 18 and the protruding piercing body 20 to pierce through the bottom of a covering layer 27 of the medium temperature heating pack 23, so that the temperature raising liquid 25 in the pack 23 can flow out rapidly to mix with quicklime ( CaO(s) ) and produce a chemical reaction ( the chemical formula is CaO(s) + NaCl (s) + CH₃ COOH(1) + H₂O(1) ) , the liquid in the pack 23 reacts with partial quicklime firstly to release heat so as creating a first stage temperature change, mean time, the heat produced offsets the ambient low temperature, and thereafter, it is just capable to raise the temperature, hence the temperature can be only raised to 50°C after 20 seconds (as shown by "a" in Fig. 7, wherein the horizontal axis represents time, while the longitudinal axis represents temperature);and because the amounts of NaCl and CH₃ COOH (1) are small, they are exhausted antecedently, and a part of H₂O(1) is left; thereby, CaO(s) can react with the residual H₂O(1) ( the chemical formula is CaO(s) + H₂O(1) -> Ca(OH) ( s) ) to release a lot of heat energy, the temperature now is raised, the heat energy produced needs not to offset the ambient low temperature, so that in this second stage the temperature can be raised up to 140°C after 37 seconds ( as shown by "b" in Fig. 7); CaO(s) is partially unreacted, when up to 140°C, the covering layer 28 of the high temperature heating pack 24 melts (the dot line 28 in Fig. 6 illustrates this situation ), the temperature raising liquid 26 in the high temperature heating pack 24 therefore flows out to react with the residual CaO(s),the heat energy released this time also needs not to offset the ambient temperature and being in a high temperature, therefore, the temperature of the stony material in this third stage can be raised up to the high temperature of 250°C within 60 seconds (as shown by "c" in Fig. 7), and the temperature can descend gradually in 2 minutes to get the temperature most appropriate for eating (this is the fourth stage, as shown by "d" in Fig. 7), thus it is far better than the case of the automatically heating foods (on the market) which get a lower temperature and need a lenghty heating time, besides, the residual bacteria in the foods can be effectively diminished by the high temperature of 250°C, nevertheless, the heating time is very short (only for several decades of seconds), hence the foods will not be degenerated, and can be offered as hot, safe and healthful foods, the short heating time makes people wait no longer, thereby increases the efficiency of use, the reacting products after heating can be resolved by the Nature, being not toxic, so that they will not contaminate the environment.

In conclusion, the inventor made the present invention through hard study; By the unique and excellent design and technical approaches of the present invention, a high temperature of 250°C can be achieved within a very short time, so as to effectively diminish the residual bacteria in foods, and also to avoid the food's degeneration which can be produced by a lenghty heating, therefore the foods can be offered as hot, safe and healthful ones, they are not to contaminate the environment, these are the unique effect of the present invention.

Having thus described the present invention, what is claimed as new and improved and practical and desire to be secured by Letters Patent of the United States is:
The features disclosed in the foregoing description, in the claims and/or in the accompanying drawings may, both, separately and in any combination thereof, be material for realising the invention in diverse forms thereof.

## Claims

1. Food heating technique for producing high temperature, wherein using mainly:
quicklime as a main component for heat producing;
a medium temperature heating pack having a temperature raising liquid containing components of NaCl(s) + CH₃ COOH (1) + H₂O(1), wherein NaCl(s) being about 0.03g, CH₃ COOH (1) being about 0.8cc , H₂O(1) being about 8cc , and having a covering layer being of plastic film;
a high temperature heating pack haveing a temperature raising liquid containing components of NaCl(aq) + CH₃ COO H(1) + H₂O(1) , wherein NaCl(aq) being about 0.02cc , CH₃ CO OH(1) being about 0.8cc , H₂O(1) being about 9cc ,and having a covering layer being of plastic film having a melt point of 140°C , and a heater lid which comprising:
a pressing pin, being provided at the mid point of said heater lid;
a protruding piercing body, being surrounding said pin , on said piercing body being provided with a plurality of bending grooves, and a lid body being formed by said grooves;
a receiving tank for receiving said quick lime, medium and high temperature heating packs;
said technique being characterized in that, when all the components being assembled, said medium temperature heating pack being pierced by said pressing pin and protruding piercing body, such that the temperature raising liquids in said medium and high temperature packs being able to be mixed with quicklime rapidly to create a chemical reaction, and the temperature being getting high up to 250°C, thus the heating time of foods being able to be reduced, and the residual bacteria in foods being able to be diminished, while the foods being able to avoid being heated for a lenghty time that can degenerate the foods so that it being able to supply hot, safe and healthful foods, while the reacting products being able to be resolved by the Nature and being nontoxic, not contaminable to the environment, besides, it being able to reduce the waiting time for heating, so as to increase the effect of use.

2. The food heating technique for producing high temperature as stated in claim 1, wherein the temperature-time changing relation thereof includes four stages of heating processes.

3. The food heating technique for producing high temperature as stated in claim 2, wherein the heating process in the first stage taking 0 to 20 seconds, the temperature thereof being raised from 25°C to 50°C, the heat energy therein being supplied by NaCl, CH₃ COOH and a small amount of H₂O and CaO; NaCl and CH₃ COOH being exhausted in this stage.

4. The food heating technique for producing high temperature as stated in claim 2, wherein the heat energy in the heating process of the second stage being supplied by the residual CaO and H₂O, the heat energy in said stage needing not to offset the ambient low temperature as in sid heating process of said first stage, therefore said heat energy being able to be completely used for raising the temperature, so that the temperature being raised up to 140°C within 37 seconds; the amount ratio of said CaO being higher than said H O, so that a small amout of CaO being not reacted and releasing heat energy.

5. The food heating technique for producing high temperature as stated in claim 2, wherein the heat energy in the heating process of the third stage being supplied by the temperature raising liquid comprised of NaCl(aq), CH COOH(1) and H O(1) in said high temperature heating pack, the covering layer of said pack melting at 140°C, so that said temperature raising liquid mixing with said unreacted CaO and releasing heat energy; the heat energy in said stage needing not to offset the ambient temperature too, yet the temperature now having been high up to 140°C, therefore, the temperature being able to raised up to 250°C within several seconds, thus giving the effect of reaching the high temperature in a very short time.

6. The food heating technique for producing high temperature as stated in claim 5, wherein when the temperature reaching 250°C, the chemical reaction being ceased, so that the temperature being no more raised, and being gradually descended till a most suitable temperature for eating within 2 minutes.

7. The food heating technique for producing high temperature as stated in claim 5, the total heating time thereof being from 0 to 60 seconds, and the temperature being raised to 250°C ,this being a heating technique which needs a very short time to raise to a high temperature, therfore being able to supply hot, safe and healthful foods.

8. The food heating technique for producing high temperature as stated in claim 1, where in the reacting products thereof being able to be completely resolved by the Nature, being nontoxic, and not contaminable to the environment, thus being able to coincide with the requirement for protecting the environment.
